# EUROPÄISCHE PATENTANMELDUNG

(11) **EP 1 638 180 A1**
(43) Veröffentlichungstag der Anmeldung: **22.03.2006**
(21) Anmeldenummer: 05020098.9
(22) Anmeldetag: 15.09.2005
(51) Int. Cl.: H02G 15/113, H02G 15/18, H01R 4/70

(54) **Haube zum Abdecken des Kopfes einer Isolationskerze**

(30) Priorität: 16.09.2004 DE 102004045788
(71) Anmelder: LWT-Sicherheitswerkzeuge Jürgen Lowitzki, 42899 Remscheid (DE)
(72) Erfinder: Lowitzki, Kay, 42897 Remscheid (DE)
(74) Vertreter: Füssel, Michael

(57) **Zusammenfassung**

Die vorliegende Erfindung betrifft eine Haube (1) zum Abdecken des Kopfes einer Isolationskerze, wie sie an dem Niederspannungsanschluß einer Stromversorgungseinheit verwendet wird, wobei die Haube (1) aus einem Elastomer gefertigt ist und an denjenigen Stellen, wo das Anschlußkabel wahlweise und standardmäßig herausgeführt wird, jeweils einen Verschlußdeckel als Paßformeinsatz aufweist.

## Beschreibung

Die vorliegende Erfindung betrifft eine Haube zum Abdekken des Kopfes einer Isolationskerze, welche zwischen dem Niederspannungsanschluß einer Stromversorgungseinheit und einem vom Niederspannungsanschluß wahlweise im wesentlichen seitlich oder parallel zur Längsachse der Isolationskerze abgehenden Anschlußkabel angeordnet ist.

Derartige Hauben sind bekannt, z.B. aus DE 296 21 332 A1.

Dort wird für den Erdungsanschluß eines Isolators eine bewegliche Abdeckkappe vorgesehen.

Aus DE 94 09 218 U1 oder DE 196 44 496 C2 sind weitere Abdeckkappen bekannt, die aber lediglich einen seitlich abgehenden Kabelanschluß ermöglichen. Dieses Problem beseitigt die Abdeckklappe gemäß DE 198 05 059 A1. Dort kann der Kabelanschluß seitlich oder oben sitzen.

Die Aufgabe der Erfindung besteht darin, eine derartige Haube zu schaffen, die bei vereinfachtem Herstellungsverfahren auch für unterschiedliche Anschlußseiten einfach umrüstbar ist und unabhängig davon ausreichenden Schutz gegen Berührsicherheit und Verschmutzung bietet.

Diese Aufgabe löst die Erfindung mit den Merkmalen des Hauptanspruchs.

Wesentlich ist, daß die Haube fertigungsseitig zwei vorbereitete Öffnungen aufweist, von denen eine im Gebrauchszustand kopfseitig und die andere seitlich an der Haube vorgesehen ist und daß für jede dieser Öffnungen ein vorbereiteter Paßformeinsatz bereitgestellt wird, mit dessen Hilfe die jeweils nicht für die herausgeleiteten Kabelanschlüsse benötigte Öffnung berührsicher und so verschlossen wird, daß auch eine Verschmutzung des innerhalb der Haube befindlichen elektrischen Anschlusses verhindert wird.

Grundsätzlich weist die Haube daher auf lediglich einer einzigen ihrer bezüglich der Axialrichtung der Isolationskerze parallel verlaufenden Seiten der Umfangswand einen Trennschlitz auf, der nach Überstülpen der Haube über den elektrischen Anschluß verschließbar ist.

Der Trennschlitz verläuft daher lediglich längs einer der Seitenwände der Haube bis in den Kopf der Haube hinein und wird insbesondere im Kopfbereich der Haube von der dort befindlichen Öffnung für den Paßformeinsatz durchbrochen.

Die beiden Öffnungen für die Paßformeinsätze durchbrechen daher mit ihren quer zur Ebene des Trennschlitzes verlaufenden Begrenzungswänden die durchgehende Länge des Trennschlitzes, so daß der Trennschlitz sich letztlich von der in Gebrauchsstellung unten befindlichen Stülpöffnung der Haube bis zur ersten Öffnung, von der ersten Öffnung bis zur zweiten Öffnung und dann allenfalls noch ein kleines Stück in Richtung zu der den Trennschlitz gegenüberliegenden Wandung der Haube erstreckt.

Zweckmäßigerweise besitzen beide Öffnungen bezüglich der Längsachse der Isolationskerze übereinstimmende Längsabmessungen und bezüglich der Ebene des Trennschlitzes übereinstimmende Querabmessungen.

Diese Weiterbildung bietet den Vorteil, daß die Paßformeinsätze für die kopfseitige und die seitliche Öffnung der Haube von übereinstimmendem Grundriß sein können.

Dabei empfiehlt es sich, die Tiefe der Öffnungen nach Außen und ebenso nach Innen jeweils durch einen Vorsprung zu begrenzen, so daß die Paßformeinsätze nach dem Überstülpen der Haube über den elektrischen Anschluß einfach in die Öffnungen eingesetzt werden können ohne die Gefahr herauszufallen.

Der Vorsprung selber muß nur lokal das Herein- oder Herausfallen des Paßformeinsatzes verhindern.

Vorzugsweise wird jedoch ein jeweils vollständig um die Öffnung innenseitig und außenseitig herumlaufender Vorsprung empfohlen.

Der Vorteil dieser Ausführungsform liegt darin, daß durch den jeweils umlaufenden Vorsprung auch das Eindringen von Wasser bzw. Feuchtigkeit nahezu völlig ausgeschlossen ist.

Um beide Öffnungen zwischen den innen- und außenseitigen Vorsprüngen übereinstimmende Tiefenabmessungen aufweisen, ist auch insoweit die Kompatibilität der Paßformstücke gewährleistet.

Zweckmäßigerweise befindet sich die Öffnung zum Einsetzen des kopfseitigen Paßformeinsatzes am Ende des Trennschlitzes, so daß die Querseite der Öffnung praktisch auch das Ende des Trennschlitzes bedeutet.

Da die Haube aus elastomerem Material besteht, läßt sie sich auf diese Weise einfach über den elektrischen Anschluß stülpen, ohne daß die Gefahr des Einreißens besteht.

Die Haube muß längs des Trennschlitzes zumindest lokal verschließbar sein.

Die Verschlußfunktion muß dann von Druckklipsen, Nieten o.ä. wahrgenommen werden.

Insoweit kommt auch ein reiß- oder gleitverschlußähnliches System in Betracht.

Zweckmäßigerweise sind jedoch beidseits des Trennschlitzes wandartige Verschlußflansche vorgesehen, die über miteinander fluchtende Durchbrüche verfügen zum Verschließen der Haube mittels entsprechender Verschlußschrauben.

Dieser Weiterbildung kommt insbesondere dann besondere Qualität zu, wenn die Haube flexibel und elastisch im sogenannten Tauchverfahren hergestellt wird.

Dabei wird ein den Innenabmessungen der Haube entsprechendes voluminöses Formstück auf eine vorbestimmte Temperatur aufgeheizt, die der Verfestigungstemperatur eines bei dieser vorbestimmten Temperatur gelierenden Kunststoffes entspricht, so daß mit Verweilen des voluminösen Formstücks im verflüssigten Kunststoff eine sich zeitabhängig verdickende Wand aus gelierendem Kunststoff um das Formstück herum ansammelt und auf diese Weise auch die beiden wandartigen Verschlußflansche bildet.

Die Paßformeinsätze bestehen aus einem schaumstoffartigen Kunststoff von etwa 1 bis 3 cm Dicke und bilden auf diese Weise jeweils einen stabilen Deckel in der Haube.

Vorgeschlagen wird insoweit, zumindest einen der Paßformeinsätze mit vorgefertigt ausbrechbaren Kabeldurchführungsöffnungen auszustatten, die bedarfsweise, über unterschiedliche Durchmesser verfügen.

Dabei können mehrere unterschiedliche Durchmesser an ein und derselben Stelle angeordnet sein, da die Herausführungsstelle des Anschlußkabels an sich bekannt ist.

Darüber hinaus wird vorgeschlagen, zumindest eines der Paßformstücke mit einem Kragen auszustatten, der über den außenseitig an der Öffnung angeordneten Vorsprung hinausragt und auf diese Weise einen zusätzlichen Schutz gegen ungewollte Verschmutzung des elektrischen Anschlusses bietet.

Die oben genannte Herstellungsmethode über ein Tauchverfahren ermöglicht die Herstellung der Haube einfarbig oder auch mehrfarbig und kontrastierend.

Setzt man eine derartige Haube einer weiteren Temperaturbehandlung aus, die bei einer Temperatur oberhalb der Verfestigungstemperatur des Kunststoffs liegen sollte, entstehen derartige Hauben mit spiegelglatt aussehender Außenfläche und erhalten auf diese Weise ein gefälliges Aussehen.

Im folgenden wird die Erfindung anhand von Ausführungsbeispielen näher erläutert.

Es zeigen:
- Fig. 1: ein erstes Ausführungsbeispiel der Erfindung im Einbauzustand
- Fig. 2: das Ausführungsbeipiel gemäß Figur 1 aus Blickrichtung II-II

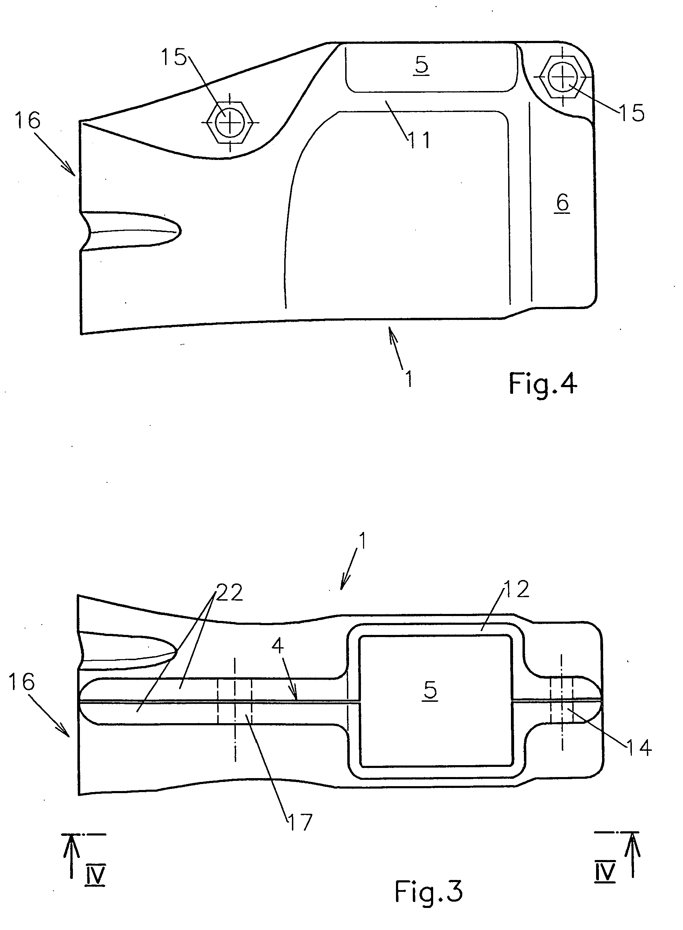

- Fig. 3: ein Ausführungsbeispiel in Blickrichtung zur seitlichen Richtung III-III
- Fig. 4: das Ausführungsbeispiel gemäß Fig. 3 in Blickrichtung VI-VI

Sofern im Folgenden nichts anderes gesagt ist, gilt die folgende Beschreibung stehts für alle Figuren.

Die Figuren zeigen eine Haube 1 zum Abdecken des Kopfes einer Isolationskerze.

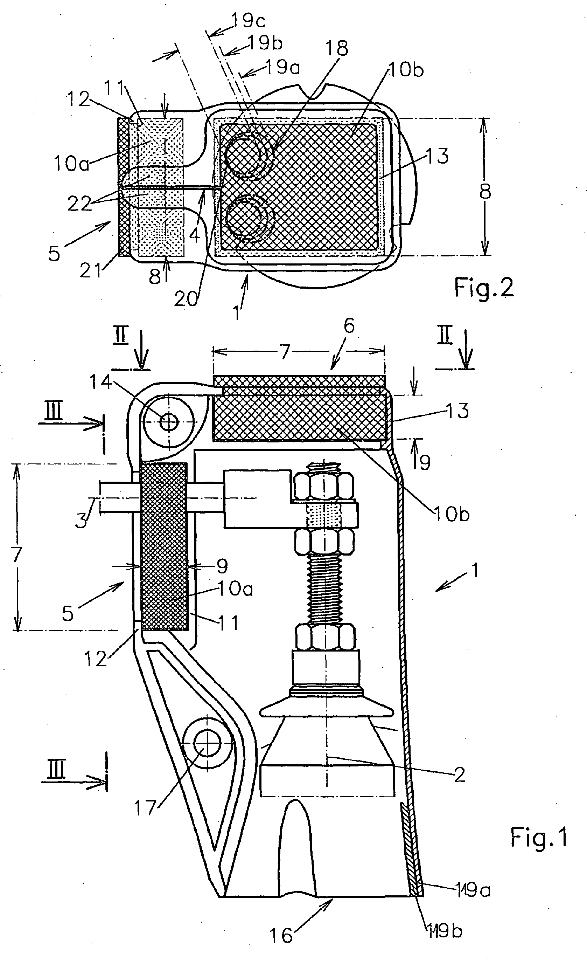

Die Isolationskerze ist in Fig. 1 schematisch dargestellt.

Sie weist an ihrem oberen Ende eine eingeschraubte Gewindestange auf, die mit einer Kontermutter gegen Verdrehen gesichert ist.

Am oberen Ende der Gewindestange befindet sich zwischen zwei gegensätzlich wirkenden Muttern ein anschraubbarer Flansch, an den - hier - seitlich ein nicht näher bezeichnetes Anschlußkabel befestigt ist.

Eine derartige Isolationskerze sitzt zwischen dem Niederspannungsanschluß einer Stromversorgungseinheit und den Anschlußkabeln.

Die gezeigte Haube 1 dient daher zum Abdecken der Isolationskerze zusammen mit dem abgehenden Anschlußkabel gegen Feuchtigkeit, Verschmutzung und soll darüber hinaus auch eine gewisse Isolationswirkung gegen Berühren besitzen.

Das Anschlußkabel kann dabei wahlweise im wesentlichen seitlich entsprechend Figur 1 oder auch parallel zur Längsachse 2 der Isolationskerze nach oben aus der Haube herausgeführt werden.

Die Montage der Haube erfolgt, in dem diese mit ihrer Stülpöffnung 16 voran über das entsprechend vormontierte Anschlußkabel gestülpt wird.

Im gezeigten Fall wird das Anschlußkabel in Seitenrichtung 3 aus dem Inneren der Haube herausgeführt. Die Haube ist hier einstückig aus einem elastomeren Kunststoff gefertigt und weist auf derjenigen Seite, wo das Anschlußkabel seitlich herausgeführt wird, einen Trennschlitz 4 auf, der den Mantel der Haube dort soweit auftrennt, daß diese über die gesamte Kopfeinheit der Isolationskerze gestülpt werden kann.

Der Trennschlitz ist mit einfachen Mitteln verschließbar, wobei die durchgehende Länge des Trennschlitzes, also diejenige Länge, die bei der Stülpöffnung 16 beginnend bis zum anderen Ende gemessen wird, durchbrochen ist.

Die Länge des Trennschlitzes setzt sich insoweit aus einzelnen Teillängen zusammen, wobei der Trennschlitz jeweils an den Stellen des seitlichen oder in alternativer Ausführungsform parallel zur Längsachse abgehenden Anschlußkabels von Öffnungen 5, 6 durchbrochen ist, von denen sich jede beidseitig quer und längs zum Trennschlitz erstreckt und eine Öffnung bereitstellt, in welche ein Paßformeinsatz 10a,b einsetzbar ist.

Damit wird erreicht, daß ein und dieselbe Haube 1 unabhängig von der jeweiligen Anschlußsituation an der Isolationskerze verwendbar ist.

Jeweils die nicht zum Durchführen des Anschlußkabels benötigte Öffnung wird mit einem entsprechenden Paßformeinsatz verschlossen, während der komplementäre Paßformeinsatz zum dichten Abschluß des Anschlußkabels ausgelegt ist.

Zusätzlich zeigen die Figuren, daß beide Öffnungen, also die seitliche Öffnung 5 und die kopfseitige Öffnung 6 von jeweils übereinstimmenden Längsabmessungen 7 sind, die bezüglich der Längsmittelebene 2 der Isolationskerze orientiert sind.

Dabei ist allerdings die Winkellage zwischen dem seitlichen Paßformeinsatz 10a und dem kopfseitigen Paßformeinsatz 10b zu berücksichtigen.

Im Prinzip sind beide Paßformeinsätze 10a,10b von rechteckigem Grundriß und weisen die selben Längsabmessungen 7 auf.

Zusätzlich ergibt sich daraus auch, daß die Querabmessungen 8 übereinstimmen, die quer bezüglich der Ebene des Trennschlitzes 4 liegen.

Auch die Tiefenabmessungen der Öffnungen 5,6 sind im vorliegenden Fall identisch und werden nach außen und nach innen von einem äußeren Vorsprung 12 bzw. inneren Vorsprung 11 begrenzt.

Äußerer Vorsprung 12 und innerer Vorsprung 11 laufen bevorzugt umlaufend um die Öffnung herum, so daß die Paßformeinsätze 10a,10b jeweils bündig und umlaufend an den Vorsprüngen 12,11 abgestützt sind.

Falls insoweit die Längs-, Quer- und Tiefenabmessungen der Öffnungen 5,6 übereinstimmen, sind die Paßformeinsätze 10a,10b miteinander kompatibel, d.h. austauschbar, je nach Einbausituation am Installationsort.

Zusätzlich zeigt insbesondere Figur 2, daß der Trennschlitz 4 auf dem Kopf der Haube 1 dort endet, wo die vom Trennschlitz 4 abgewandte Querseite 13 des kopfseitigen Paßformeinsatzes 10 endet.

Die kopfseitige Öffnung 6 bildet daher eine Erweiterung des Trennschlitzes 4, so daß insbesondere dort die Haube auch beim Überstülpen über den Elektroanschluß leicht aufweitbar ist ohne daß die Gefahr des Einreißens am Ende des Trennschlitzes 4 gegeben wäre.

Ergänzend zeigen die Figuren, daß der Trennschlitz 4 von zwei wandartigen Verschlußflanschen 22 begrenzt wird, die Bestandteil der Haube 1 sind und daß die Verschlußflansche zumindest zwischen den Öffnungen 5, 6 einem Durchbruch 14 aufweisen, der von einer Verschlußschraube 15 durchsetzt ist.

Auf diese Weise lassen sich durch einfaches Andrehen der Verschlußschraube 15 die Verschlußflansche bündig gegeneinander drücken um die gewünschte Dichtigkeit gegen Feuchtigkeit und Verschmutzung zu erzielen.

Zusätzlich kann von der seitlichen Öffnung 5 für den seitlichen Paßformeinsatz 10a aus betrachtet in Richtung zur Stülpöffnung 16 der Haube 1 ein weiterer Durchbruch 17 vorgesehen sein, um dort eine weitere Verschlußschraube anzubringen.

Damit lassen sich die Paßformeinsätze 10a, 10b, und zwar beide, jeweils unverrückbar fest in die Öffnungen 5,6 der Haube 1 einpressen.

Zusätzlich zeigt insbesondere Figur 2, daß zumindest einer der Paßformeinsätze 10a,b vorgefertigt mit ausbrechbaren Kabeldurchführungsöffnungen 18 versehen ist.

Abhängig von der Dicke des jeweiligen Kabels kann vorgesehen sein, die Kabeldurchführungsöffnung 18 mit unterschiedlichen Durchmessern 19a,b,c auszugestalten, damit auch Kabel unterschiedlicher Durchmesser bündig mit dem Paßformeinsatz abschließen.

Insbesondere aus optischen Gründen wird empfohlen, die Kabeldurchführungsöffnungen unterschiedlicher Durchmesser so gegeneinander exzentrisch zu lagern, daß eine gemeinsame Berührungsstelle 20 entsteht, wo sich alle aufbrechbaren Stücke tangieren.

Ferner zeigt insbesondere Fig. 1, daß die Paßformeinsätze 10a,10b entweder nur innerhalb der umlaufenden Vorsprünge 11,12 angeordnet sein können oder alternativ mit einem Kragen 21 über die Öffnung hervorstehen können, um mit der der Haube 1 zugewandten Fläche des Kragens 21 einen bündigen Abschluß mit der Außenfläche der Haube 1 zu erzielen.

Auf diese Weise entsteht zusätzlich zum dichten Sitz des jeweiligen Paßformeinsatzes in seiner Öffnung eine gegenüber der Außenseite der Haube 1 wirksame Labyrintdichtung, welche auch von feinstem Staubpartikeln nicht durchdrungen wird.

Die Haube weist im wesentlichen überall dieselbe Wandstärke auf.

Dieses Merkmal begünstigt die Fertigung der Haube im sogenannten Tauchverfahren.

Dabei kann durch eine sich an das Tauchverfahren anschließende Temperaturbehandlung auch eine spiegelglatte Oberfläche an der Haube erzeugt werden.

Ergänzend zeigt Fig.1, daß die Haube aus zwei Schichten, nämlich einer inneren Schicht 119b und einer äußeren Schicht 119a aufgebaut sein kann. Die beiden Schichten können farblich unterschiedlich, vorzugsweise kontrastierend zueinander sein.

Zusätzlich soll von der Erfindung eine Haube mitumfaßt sein, deren oben liegender Paßformeinsatz einstückig mit dem Elastomer der Haube verbunden ist.

### Bezugszeichenliste:

- 1: Haube
- 2: Längsachse der Isolationskerze
- 3: Seitenrichtung
- 4: Trennschlitz
- 5: seitliche Öffnung
- 6: kopfseitige Öffnung
- 7: Längsabmessung von 5,6
- 8: Querabmessung von 5,6
- 9: Tiefenabmessung von 5,6
- 10a: seitlicher Paßformeinsatz
- 10b: kopfseitiger Paßformeinsatz
- 11: innerer Vorsprung
- 12: äußerer Vorsprung
- 13: abgewandte Querseite von 6
- 14: Durchbruch
- 15: Verschlußschraube
- 16: Stülpöffnung
- 17: weiterer Durchbruch
- 18: Kabeldurchführungsöffnung
- 19a,b,c: diverse Durchmesser
- 20: Berührungsstelle
- 21: Kragen
- 22: Verschlußflansch
- 119a: äußere Schicht
- 119b: innere Schicht

## Patentansprüche

1. Haube (1) zum Abdecken des Kopfes einer Isolationskerze, welche zwischen dem Niederspannungsanschluß einer Stromversorgungseinheit und einem vom Niederspannungsanschluß wahlweise im wesentlichen seitlich oder parallel zur Längsachse der Isolationskerze abgehenden Anschlußkabel angeordnet ist, wobei die Haube (1) einstückig aus einem Elastomer gefertigt ist und einen in Axialrichtung (2) der Isolationskerze verlaufenden Trennschlitz (4) aufweist, der verschließbar ist und längs einer der Seitenwände der Haube durchgehend auf der Seite zum Anschluß des seitlich anordbaren Anschlußkabels bis in den Kopf der Haube hinen verläuft und an den zwei Stellen zum Anschluß jeweils des seitlich oder parallel zu der Längsachse (2) abgehenden Anschlußkabels von Öffnungen (5,6) zum Einsetzen jeweils eines zugehörigen Paßformeinsatzes (10a,b) durchbrochen ist, wobei die Öffnungen (5,6) sich beidseitig quer und längs zum Trennschlitz (4) erstrecken und ein Paßformeinsatz (10a;10b) mit vorgefertigt ausbrechbaren Kabeldurchführungsöffnungen in jede der beiden Öffnungen (5;6) eingesetzt ist.

2. Haube nach Anspruch 1, **dadurch gekennzeichnet, daß** beide Öffnungen (5,6) von übereinstimmenden Längs- und Querabmessungen sind.

3. Haube nach Anspruch 1 oder 2, **dadurch gekennzeichnet, daß** die Tiefe der Öffnungen (5,6) nach Außen und Innen jeweils durch einen Vorsprung (11,12) vorzugsweise jeweils einen vollständig umlaufenden Vorsprung (11,12), begrenzt wird.

4. Haube nach Anspruch 3, **dadurch gekennzeichnet, daß** beide Öffnungen (5,6) zwischen den äußeren und inneren Vorsprüngen (11,12) von übereinstimmenden Tiefenabmessungen (9) sind.

5. Haube nach einem der Ansprüche 1 bis 4, **dadurch gekennzeichnet, daß** der Trennschlitz (4) an dem Kopf der Haube (1) auf der vom Trennschlitz (4) abgewandten Querseite (13) der Öffnung (6) zum Einsetzen des kopfseitigen Paßformeinsatzes (10b) endet.

6. Haube nach einem der Ansprüche 1 bis 5, **dadurch gekennzeichnet, daß** der Trennschlitz (4) von zwei wandartigen Verschlußflanschen begrenzt wird und daß die Verschlußflansche zumindest zwischen den Öffnungen (5,6) einen Durchbruch (14) für eine Verschlußschraube (15) aufweisen.

7. Haube nach Anspruch 6, **dadurch gekennzeichnet, daß** zwischen der Öffnung (5) für den seitlichen Paßformeinsatz (10a) und der Stülpöffnung (16) der Haube (1) ein weiterer Durchbruch (17) für eine weitere Verschlußschraube (15) vorgesehen ist.

8. Haube nach einem der Ansprüche 1 bis 7, **dadurch gekennzeichnet, daß** jeweils mehrere Kabeldurchführungsöffnungen (18) mit unterschiedlichen Durchmessern (19a,b,c) vorgesehen sind.

9. Haube nach Anspruch 8, **dadurch gekennzeichnet, daß** die unterschiedlichen (19a,b,c) Durchmesser der Kabeldurchführungsöffnungen (18) eine gemeinsame Berührstelle (20) aufweisen.

10. Haube nach einem der Ansprüche 1 bis 7, **dadurch gekennzeichnet, daß** zumindest eines der Paßstücke (10a; 10b) einen über die Öffnung (5;6) vorstehenden Kragen (21) aufweist, der die jeweilige Öffnung bis auf die Außenfläche der Haube (1) überragt.

11. Haube nach einem der Ansprüche 1 bis 10, **dadurch gekennzeichnet, daß** die Haube (1) überall von gleicher Wandstärke ist.

12. Haube nach Anspruch 11, **dadurch gekennzeichnet, daß** die Haube (1) aus einem bei vorbestimmter Temperatur verflüssigbaren Kunststoff hergestellt ist, der bei einer vorbestimmten höheren Temperatur durch Gelieren verfestigt wird.

13. Haube nach- Anspruch 11, **dadurch gekennzeichnet, daß** die Haube anschließend einer dartigen Temperaturbehandlung unterzogen wird, daß die Außenfläche der Haube (1) spiegelglatt wird.

14. Haube nach Anspruch 13, **dadurch gekennzeichnet, daß** der nach oben weisende Paßformeinsatz einstückig mit dem Elastomer der Haube verbunden ist.
